# EUROPÄISCHE PATENTANMELDUNG

(11) **EP 0 601 471 A1**
(43) Veröffentlichungstag der Anmeldung: **15.06.1994**
(21) Anmeldenummer: 93119403.9
(22) Anmeldetag: 02.12.1993
(51) Int. Cl.: G11B 5/702, G11B 5/708

(54) **Magnetische Aufzeichnungsträger**

(30) Priorität: 10.12.1992 DE 4241505
(71) Anmelder: BASF Magnetics GmbH, D-68165 Mannheim (DE)
(72) Erfinder: Brodt, Gregor, Dr., D-64646 Heppenheim (DE); Bobrich, Michael, Dr., D-67459 Boehl-Iggelheim (DE); Kress, Ria, Dr., D-67063 Ludwigshafen (DE)
(74) Vertreter: Abel, Manfred

(57) **Zusammenfassung**

Die Erfindung betrifft magnetische Aufzeichnungsträger, bestehend aus einem nichtmagnetischen Trägermaterial und mindestens einer darauf haftfest aufgebrachten magnetisierbaren Schicht auf Basis eines Polyurethanbindemittels, wobei das Bindemittel zu mindestens 50 Gew.% aus einem Phosphonatgruppen aufweisenden, verzweigten Polyurethanelastomeren mit Harnstoffgruppen an den Kettenenden besteht.

## Beschreibung

Die Erfindung betrifft magnetische Aufzeichnungsträger, bestehend aus einem nichtmagnetischen Trägermaterial und mindestens einer darauf haftfest aufgebrachten magnetisierbaren Schicht auf Basis eines Polyurethanbindemittels, wobei das Bindemittel zu mindestens 50 Gew.% aus einem Phosphonatgruppen aufweisenden, verzweigten Polyurethanelastomeren mit Harnstoffgruppen an den Kettenenden besteht.

An magnetische Aufzeichnungsträger werden hinsichtlich der Aufzeichnung, der Wiedergabe und auch der Alterungsbeständigkeit immer höhere Anforderungen gestellt. Um diesen Anforderungen gerecht zu werden, kommt dem Bindemittel eine zunehmende Bedeutung zu.

So wird zur Verbesserung der magnetischen Eigenschaften eine erhöhte Packungsdichte des magnetischen Materials in der Schicht angestrebt, was eine Verringerung des Bindemittelanteils in der Schicht zur Folge hat. Ebenso wird versucht, ein verbessertes Signal-Rausch-Verhältnis durch die Verwendung immer feinteiligerer magnetischer Materialien mit ausgeprägter Nadelform zu erzielen. Diese Materialien werden zudem zur Verringerung von Alterserscheinungen sehr oft oberflächenmodifiziert. Bedingt durch solche Maßnahmen wird sowohl die Aufteilung der Pigmente im Dispergierprozeß als auch das Erreichen einer guten Dispersionsstabilität erheblich erschwert. Insgesamt müssen die Magnetschichten aber sehr flexibel sein, eine hohe Elastizität aufweisen und eine hohe Reißfestigkeit besitzen. Daneben wird, zur Vermeidung von Pegeleinbrüchen, zunehmend eine Verringerung der Reibungswerte, eine Erhöhung der Abrieb- und Verschleißfestigkeit gefordert. Des weiteren gilt, daß die mechanische Stabilität der Magnetschicht insbesondere bei hoher Temperatur und hoher Luftfeuchte ebenfalls gewährleistet sein muß.

Es ist bekannt, daß Magnetschichten, die starken mechanischen Beanspruchungen unterworfen werden, als Bindemittel sich vorteilhaft erweisende Polyurethanelastomere enthalten. Besonders bewährt haben sich Polyesterurethane, wie sie in der DE-B 1 106 959, DE-B 2 753 694, EP-A 0 069 955 oder in der US-A 2 899 411 beschrieben sind.

Diese Bindemittel sind jedoch im Zusammenhang mit den oben beschriebenen Forderungen und Maßnahmen nicht verwendbar. In vielen Fällen wird die Pigmentbenetzung und -dispergierung ungünstig beeinflußt, so daß eventuelle Versinterungen beim Mahlprozeß nur ungenügend zerteilt werden oder eine Agglomeration der Pigmentteilchen nicht ausreichend verhindert wird, was zu schlechten Magnetwerten und daraus resultierend zu schlechten Bandeigenschaften in puncto Elektroakustik und Videodaten führt. Aus diesem Grund werden zur Erleichterung des Dispergiervorgangs niedermolekulare Dispergiermittel in kleineren Mengen hinzugefügt. Diese Dispergiermittel zeigen zwar ein gutes Aufteilungsverhalten, stabilisieren jedoch die Dispersion nur schlecht. Daher werden oft noch höhermolekulare Dispergierharze als zusätzliche Komponente verwendet. In DE-A 30 26 357 oder DE 31 37 293 wird beispielsweise der Zusatz von Polyesterharzen, die SO₃M-Gruppen aufweisen, beschrieben.

Diese Verfahren zur Verbesserung des Dispergiervorgangs weisen jedoch Nachteile auf. So können niedermolekulare Dispergiermittel bei ungünstigen Klimabedingungen, wie hohe Temperatur und/oder hohe Luftfeuchtigkeit leicht ausschwitzen. Dadurch kommt es in Aufnahme- bzw. Wiedergabegeräten zu Ablagerungen an allen bandberührenden Teilen, besonders am Kopf, wodurch Pegeleinbrüche verursacht werden. Außerdem steigt die Reibung (Adhäsion) stark an, wodurch es zu einem Stillstand des Bandes, dem Blocken, kommen kann. Beim Einsatz von Dispergierharzen kann es andererseits zu Verträglichkeitsproblemen in der Dispersion kommen. Diese Stoffe sind oft auch keine Filmbildner und bewirken daher ebenfalls ein Blocken. Weiterhin sind die mechanischen Eigenschaften dieser Dispergierharze oft nicht an das Eigenschaftsniveau des als Hauptbindemittel verwendete Polyurethans angepaßt. Eine Verschlechterung der mechanischen Eigenschaften bedeutet immer auch eine Erhöhung des Abriebs.

Die Verwendung von niedermolekularen Dispergierhilfsmitteln führt - da die Menge sich nach der Belegung pro m² Pigmentoberfläche richtet - zu einer Gesamtmenge an Dispersant, die für die Eigenschaften des Bandes unakzeptabel ist. Da diese Dispergiermittel polare Gruppen enthalten, nimmt die Hydrophilie der Schicht stark zu, und damit - speziell im Feuchtklima - auch folgende Effekte wie:
- Quellen der Schicht
- Ausschwitzen der Dispergier- und Gleitmittel
- Veränderungen im mechanischen Eigenschaftsniveau durch Veränderungen der "Weichmachereffekte".

Als Folge dessen wird die Blockierneigung des Bandes erhöht und die Verschmutzung des Kopfes gefördert.

Zur Verbesserung der Dispergiereigenschaften des Polyurethanbindemittels selbst wurde schon frühzeitig der Vorschlag gemacht, polare Gruppen in das Bindemittel einzubauen. Diese polaren Gruppen können prinzipiell über jede Komponente, die bei der Herstellung des Polyurethans verwendet wird, eingeführt werden. Am häufigsten ist die Verwendung von Polyestern mit polaren Gruppen (u.a. DE-A 28 33 845). Der Einbau von Diolen, die zusätzlich polare Gruppen tragen, wird beispielsweise in der JP-A 57 092 421, der DE-OS 38 14 536 oder der EP-A 193 084 beschrieben. Der nachträgliche Einbau der polaren Gruppen durch SN-Reaktion an den OH-Endgruppen der Polyurethane wird in JP-A 57 092 422 offenbart. Die bisher beschriebenen, polare Gruppen tragenden Polyurethane zeigen zwar ein verbessertes Dispergierverhalten, die Verbesserung ist aber für viele Ansprüche noch nicht ausreichend.

Weiterer Nachteil aller beschriebenen Polyurethane ist, daß die erforderliche Elastizität häufig mit einer zu geringen Härte und einer Tendenz zur Oberflächenklebrigkeit einhergeht. Es ist daher Stand der Technik, die entsprechenden Polyurethane mit anderen Bindemitteln zu kombinieren. Vorgeschlagene Bindemittel-Kombinationen sind z. B. Mischungen aus Polyurethanen mit Phenoxyharzen, mit Vinylidenchlorid-Acrylnitril-Copolymerisaten, mit Vinylchlorid-Acrylsäureester-Copolymerisaten, mit Polycarbonaten oder Polyestern. Beispielhaft sei die DE-A 32 39 160 erwähnt. Diese Bindemittelkombinationen führen zwar zu einer Verbesserung der mecha-nischen Eigenschaften der Magnetschicht, das Dispergierver-halten einer derartigen Kombination ist aber verringert. Dadurch wirken sich die besonderen Eigenschaften der magnetischen Materialien nur noch unbefriedigend aus. Dies zeigt sich durch einen niedrigeren Richtfaktor, eine geringere Remanenz und damit durch eine geringere Höhen- und Tiefenempfindlichkeit sowie eine unbefriedigendere Aussteuerbarkeit der resultierenden Aufzeichnungsträger.

Eine Möglichkeit, die Härte der Polyurethane zu erhöhen, ist die Erhöhung der Urethan- und Harnstoffgruppenkonzentration. Derartige Maßnahmen führen jedoch sehr schnell zu Produkten, die in gängigen Lösungsmitteln, wie z.B. MEK, Toluol oder THF, unlöslich werden (EP-A 01 43 337). Gemäß der DE-A 31 37 293 werden zur Erhöhung der Härte nichtmagnetische Teilchen zugemischt.

Diese beschriebenen Maßnahmen reichen jedoch nicht aus, die angestiegenen Anforderungen an das Bindemittelsystem gleichzeitig zu erfüllen. Zudem ist zum Erreichen einzelner Effekte oft eine Kombination der Polyurethane mit anderen Bindemitteln zwingend notwendig.

Nachteilig bei der Verwendung hochmolekularer Bindemittel ist jedoch der hohe Lösungsmittelbedarf, die relativ langen Dispergierzeiten und/oder die nötige 2-Phasendispergierung. Außerdem wirken sich in diesen Bindemittelsystemen die besonderen Eigenschaften der magnetischen Materialien nur unbefriedigend aus. Dies zeigt sich durch den niedrigen Richtfaktor, eine geringe Remanenz und damit eine geringe Höhen- und Tiefenempfindlichkeit sowie eine unbefriedigende Aussteuerbarkeit der resultierenden Aufzeichnungsträger.

Eine wesentliche Verbesserung des Dispergierverhaltens konnte mit niedermolekularen, OH-gruppenhaltigen Polyurethanen, wie sie in EP 0 099 533 beschrieben sind, erreicht werden. Aber auch diese Maßnahmen reichen nicht aus, die immer feinteiligeren Pigmente zu dispergieren und die immer weiter gestiegenen Anforderungen an die magnetischen Aufzeichnungsträger bezüglich Mechanik und magnetische Werte zu erfüllen.

Die Aufgabenstellung bestand darin, für extrem feinteilige ferromagnetische Pigmente mit einer BET > 40 m2g-1 für neue hochdichte Aufzeichnungssysteme - wie S-VHS im Videobereich, DAT im Audiobereich oder neue Computerbänder (MTC) im Datenbereich - ein Bindemittelsystem bereitzustellen, welches die o.g. Anforderungen
- gute Dispergierwirkung
- schnelle Dispergierung
- gute Stabilisierung der Dispersion
- geringer Lösemittelbedarf
- gute Rheologie der Dispersion, d.h. niedrige Fließgrenze und nicht zu hohe Viskosität
- guter Verlauf beim Vergießen
- hohe Pigmentfüllung der Schicht
- gute Richtbarkeit der Magnetnadeln
- gute Mechanik der Magnetschicht auch bei hohen Temperaturen
erfüllt.

Es wurde nun gefunden, daß bei einem magnetischen Aufzeichnungsträger, bestehend aus einem nichtmagnetischen Trägermaterial und mindestens einer haftfest darauf aufgebrachten Magnetschicht auf der Basis eines in einem mindestens zu 50 Gew.% aus einem thermoplastischen Polyurethan bestehenden Bindemittel feinverteilten magnetischen Materials sich die gestellte Aufgabe lösen läßt, wenn als thermoplastisches Polyurethan ein phosphonatgruppenhaltiges, in Tetrahydrofuran lösliches, isocyanatgruppenfreies, verzweigtes Polyurethan mit OH-gruppenhaltigen Harnstoffgruppen an den Kettenenden und einem Molekulargewicht (M_{w}), bestimmt mittels GPC, zwischen 4 000 und 30 000 eingesetzt wird, welches aus
A) 1 Mol eines Polyols mit einem Molekulargewicht zwischen 400 und 4000,
B) 0,3 bis 9 Mol eines Gemisches aus
   B1) mindestens einem Diol mit 2 bis 18 Kohlenstoffatomen und
   B2) einem mindestens eine Sulfonatgruppe aufweisenden Diol,
C) 0,01 bis 1 Mol eines Triols mit 3 bis 25 Kohlenstoffatomen,
D) 1,25 bis 13 Mol eines Diisocyanats mit 6 bis 30 Kohlenstoffatomen, wobei das Verhältnis NCO:OH in der Summe der Komponenten A, B, C und D 1,05:1,0 bis 1,4:1,0 beträgt, und
E) 0,05 bis 4 Mol eines OH-gruppenhaltigen, gegenüber Iso-cyanaten reaktiven primären oder sekundären Amins
hergestellt wird.

Zur Erzielung spezieller Eigenschaften ist es von Vorteil, wenn das Polymer eine OH-Zahl zwischen 25 und 75, vorzugsweise 30 bis 70 aufweist. Das Molekulargewicht liegt zwischen 4 000 und 30 000, entsprechend einem K-Wert (1 %ig in DMF) zwischen 15 und 37. Beim Aufbau dieser Polymeren hat es sich als zweckmäßig erwiesen, daß die OH-Endgruppen zum Teil, vorzugsweise über 80 % und insbesondere zu mehr als 90 % aus einem der folgenden Reste bestehen: 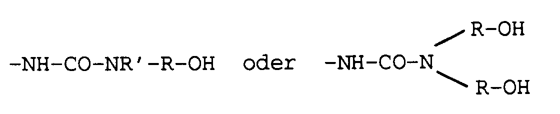
wobei
R = -(CH₂)ₙ-
R' = -H, -CH₃, - (CH₂)ₙ-CH₃ und
n = 1 bis 10
bedeuten.

In dieser Weise aufgebaute Polymere weisen gegenüber solchen ohne diese Endgruppen eine verbesserte Haftfestigkeit auf. Weiterhin besteht dadurch die Möglichkeit den Gehalt an OH-Endgruppen zu erhöhen, wodurch bei der Vernetzung mit Polyisocyanat der Vernetzungsgrad, entsprechend den Anforderungen an die Magnetschicht, in weiten Grenzen variiert werden kann. Ebenfalls von Vorteil sind die Harnstoffgruppen, welche die Mechanik der Schicht erhöhen und die Haftfestigkeit verbessern.

Das Verhältnis der Komponenten B1 und B2 zueinander wird zweckmäßigerweise entsprechend der spezifischen Oberfläche des eingesetzten magnetischen Materials gewählt.

Die erfindungsgemäß als Bindemittel in den Magnetschichten verwandten Polyurethane haben im allgemeinen eine Härte nach DIN 53 157 von 20 bis 130 s. Sie weisen ferner einen E-Modul (Elastizitätsmodul gemäß DIN 53 457) im Bereich von 50 bis 2500 Nmm⁻², eine Reißdehnung größer 70 % (DIN 53 455) und eine Reißfestigkeit zwischen 25 und 70 Nmm⁻² (DIN 53 455) auf. Der Erweichungspunkt liegt zwischen 80 und 180°C. Besonders günstig ist eine Pendelhärte (DIN 53 157) von 25 bis 125 s, ein E-Modul von 55 bis 2000 Nmm⁻², eine Reißdehnung von 80 bis 500 % und eine Reißfestigkeit von 25 bis 50 Nmm⁻².

Die vorteilhaften Eigenschaften der erfindungsgemäß aufgebauten magnetischen Aufzeichnungsträger werden im Vergleich zu den unter Verwendung der üblichen thermoplastischen Polyurethanelastomeren erhaltenen auch deutlich, wenn vor dem Auftragen der Dispersion auf den Träger ein Polyisocyanat zugesetzt wird. Für die Vernetzung kann eine Vielzahl organischer Di-, Tri- oder Polyisocyanate oder Isocyanatprepolymerer bis zu einem Molekulargewicht von 10 000, vorzugsweise zwischen 500 und 3000, verwendet werden. Bevorzugt sind Polyisocyanate bzw. Isocyanatprepolymere, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglykol.

Die Menge an zugesetzter Polyisocyanatkomponente kann je nach den an das Aufzeichnnungsmaterial gestellten Anforderungen, bezogen auf die OH-Gruppe des zu vernetzenden Polyurethanbindemittels, im Unterschuß von bis zu 70 %, vorzugsweise bis zu 50 % oder im Überschuß von bis zu 100 %, vorzugsweise von bis zu 50 %, erfolgen.

Zur Herstellung der Polyurethane wird als Komponente A ein Polydiol mit einem Molekulargewicht von 400 bis 4000, bevorzugt von 700 bis 2500, eingesetzt. Hierzu eignen sich die bekannten Polyesterole, Polyetherole, Polycarbonatdiole und Polycaprolactondiole.

Die Polyesterole sind zweckmäßigerweise überwiegend lineare Polymere mit endständigen OH-Gruppen, bevorzugt solche mit 2 OH-Endgruppen. Die Säurezahl der Polyesterole ist kleiner als 10 und vorzugsweise kleiner als 3. Die Polyesterole lassen sich in einfacher Weise durch Veresterung von aliphatischen und/oder aromatischen Dicarbonsäuren mit 4 bis 15 C-Atomen, vorzugsweise 4 bis 6 C-Atomen, mit Glykolen, bevorzugt Glykolen mit 2 bis 25 C-Atomen oder durch Polymerisation von Lactonen mit 3 bis 20 C-Atomen herstellen. Als Dicarbonsäuren lassen sich beispielsweise Glutarsäure, Pimelinsäure, Korksäure, Sebacinsäure, Dodecansäure und vorzugsweise Adipinsäure, Bernsteinsäure und Phthalsäuren einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureanhydride oder Carbonsäurechloride zu verwenden. Geeignete aromatische Dicarbonsäuren sind Terephthalsäure, Isophthalsäure oder Mischungen aus diesen mit anderen Dicarbonsäuren, z.B. Diphensäure, Sebacinsäure, Bernsteinsäure und Adipinsäure. Beispiele für geeignete Glykole sind Diethylenglykol, 1,5-Pentandiol, 1,10-Decandiol und 2,2,4-Trimethylpentandiol-1,5. Vorzugsweise verwendet werden 1,2-Ethandiol, 1,4-Butandiol, 1,6-Hexandiol und 2,2-Dimethylpropandiol-1,3; 1,4-Dimethylolcyclohexan; 1,4-Diethanolcyclohexan, ethoxilierte/propoxilierte Produkte des 2,2-Bis-(4-hydroxyphenylen)-propan (Bisphenol A). Je nach den gewünschten Eigenschaften der Polyurethane können die Polyole alleine oder als Mischung in verschiedenen Mengen-verhältnissen verwendet werden. Als Lactone für die Herstellung der Polyesterole eignen sich z.B. α,α-Dimethyl-β-propiolacton, γ-Butyrolacton und vorzugsweise ε-Caprolacton.

Die Polyetherole sind im wesentlichen lineare, endständige Hydroxylgruppen aufweisende Substanzen, die Etherbindungen enthalten und ein Molekulargewicht von etwa 600 bis 4000, vorzugsweise von 1000 bis 2000, besitzen. Geeignete Polyetherole können leicht durch Polymerisation von cyclischen Ethern, wie Tetrahydrofuran, oder durch Umsetzung von einem oder mehreren Alkylenoxiden mit 2 bis 4 Kohlenstoffaomen im Alkylenrest mit einem Startermolekül, das zwei aktive Wasserstoffatome im Alkylenrest gebunden enthält, hergestellt werden. Als Alkylenoxide seien beispielsweise genannt: Ethylenoxid, 1,2-Propylenoxid, Epichlorhydrin, 1,2- und 2,3-Butylenoxid. Die Alkylenoxide können einzeln, alternierend nacheinander oder als Mischung verwendet werden. Als Startermoleküle kommen beispielsweise in Betracht: Wasser, Glykole, wie Ethylenglykol, Propylenglykol, 1,4-Butandiol und 1,6-Hexandiol, Amine, wie Ethylendiamin, Hexamethylendiamin und 4,4'-Diamino-diphenylmethan und Aminoalkohole, wie Ethanolamin. Ebenso wie die Polyesterole können auch die Polyetherole allein oder in Mischungen verwendet werden.

Die Polycarbonatdiole sind ebenso wie ihre Herstellung in der US-A 4 131 731 beschrieben, sie sind im allgemeinen auf Hexandiol-1,6-Basis aufgebaut.

Als Baustein B1 werden Diole mit 2 bis 20 Kohlenstoffatomen, vorzugsweise 2 bis 10 C-Atome, eingesetzt, so z.B. 1,2-Ethandiol, 1,3-Propandiol, 1,4-Butandiol, 1,6-Hexandiol, 1,5-Pentandiol, 1,10-Decandiol, 2-Methyl-1,3-propandiol, 2-Methyl-2-butyl-1,3-propandiol, 2,2-Dimethyl-1,4-butandiol, 2-Methyl-2-butyl-1,3-propandiol, Hydroxypivalinsäureneopentylglykolester, Diethylenglykol, Triethylenglykol und Methyldiethanolamin. Die Diole können einzeln oder als Gemische verwendet werden. In untergeordnetem Maße können auch Diamine mit 2 bis 15 Kohlenstoffatomen wie Ethylendiamin, 1,6-Hexamethylendiamin, 4,9-Dioxododecan-1,12-diamin, 4,4'-Diaminodiphenylmethan oder Aminoalkohole wie z.B. Monoethanolamin, Monoisopropanolamin und 2-Amino-2-methylpentan-2-ol eingesetzt werden. Hierbei hat es sich als vorteilhaft erwiesen, die dabei entstehenden Harnstoffgruppen in die Polymerkette einzubauen. Die Harnstoffgruppen am Kettenende sind hierbei von untergeordneter Bedeutung.

In gleicher Weise können als Bausteine B1 die genannten Diole auch ganz oder teilweise durch Wasser ersetzt werden.

Die die Komponente B2) bildenden Diole enthalten mindestens eine Phosphonat-Gruppe. Beispielhaft seien hierfür Verbindungen der Formel (I) - (VI) genannt, 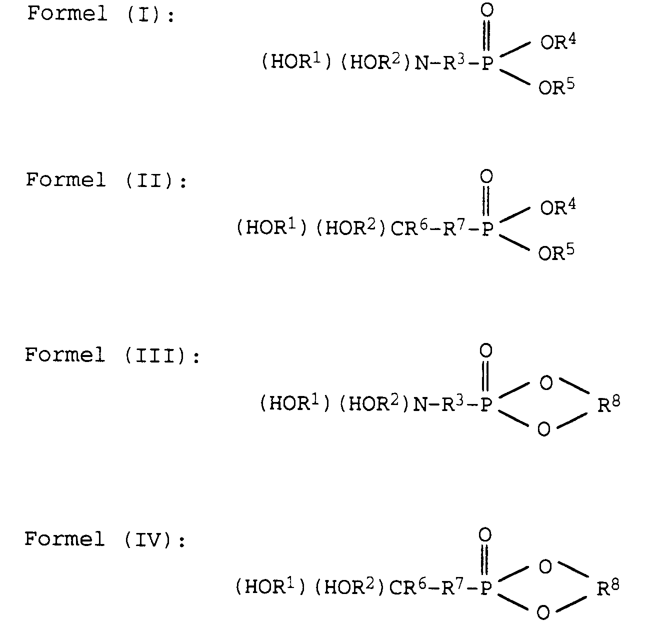
wobei in den Formeln (I)-(IV)
- R¹, R², R³, R⁷, R⁸ =: Alkylen, Cycloalkylen, Arylen, Alkenylen oder Alkinylen mit 1 bis 20 Kohlenstoffatomen
und
- R⁴, R⁵, R⁶ =: Alkyl, Cycloalkyl, Aryl, Alkenyl, Alkinyl mit 1 bis 20 Kohlenstoffatomen,
darstellt, 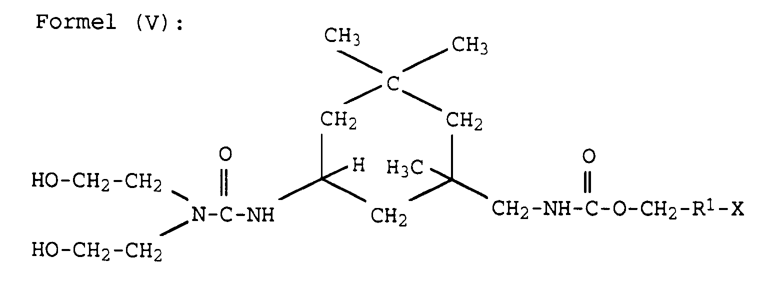
in welcher R¹ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet oder 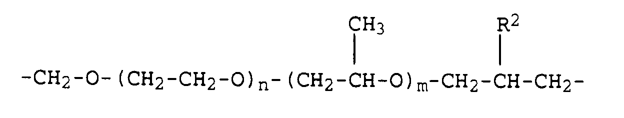
R² H oder CH₃
n = 0 bis 100
m = 0 bis 50
n + m > 1 und 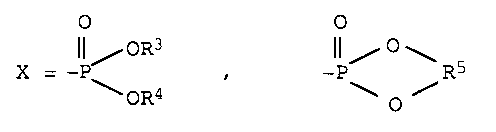
- R³, R⁴: Alkyl, Cycloalkyl, Aryl, Alkenyl, Alkinyl mit 1 - 20 Kohlenstoffatomen
- R⁵: Alkylen, Cycloalkylen, Arylen, Alkenylen oder Alkinylen mit 1 bis 20 Kohlenstoffatomen
darstellt, 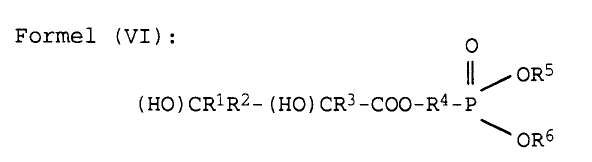
in welcher
R¹, R², R³ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet,
R⁴ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet oder 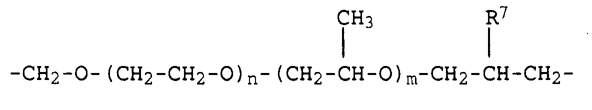
R⁷ = H oder CH₃
n = 0 bis 100
m = 0 bis 50
n + m > 1
R⁵, R⁶ jeder für sich, oder zusammen unter Ausbildung eines Ringsystems einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet.

Die Triole für die Komponente C) sind Verbindungen mit 3 bis 18, vorzugsweise 3 bis 6 C-Atomen. Beispiele für entsprechende Triole sind Glycerin oder Trimethylolpropan. Geeignet sind auch niedermolekulare Umsetzungsprodukte von z.B. Trimethylolpropan mit Ethylenoxid und/oder Propylenoxid. Das Vorhandensein von Triolen bei der Polyaddition führt zu einer Verzweigung des Endprodukts, was sich, sofern keine örtliche Vernetzung auftritt, positiv auf die mechanischen Eigenschaften des Polyurethans auswirkt. Als Polyole lassen sich hierbei beispielsweise Erythrit, Pentaerythrit und Sorbit einsetzen.

Zur Bildung der NCO-gruppenhaltigen Zwischenprodukte werden die unter A, B und C genannten Komponenten mit aliphatischen, cycloaliphatischen oder aromatischen Diisocyanaten mit 6 bis 30 C-Atomen (Komponente D) umgesetzt. Hierfür eignen sich Verbindungen wie Toluylen-2,4-diisocyanat, Toluylen-2,6-di-isocyanat, m- bzw. p-Tetramethylxyloldiisocyanat, m-Phenylendiisocyanat, 4-Chlor-1,3-phenylendiisocyanat, 1,5-Naphthylendiisocyanat, 1,5-Hexamethylendiisocyanat, 1,6-Hexamethylendiisocyanat, 1,4-Cyclohexylendiisocyanat und 1,5-Tetrahydronaphthylendiisocyanat, 4,4'-Diphenylmethandiisocyanat, Dicyclohexylmethandiisocyanat, Isophorondiisocyanat oder Gemische davon.

Danach werden die NCO-gruppenhaltigen Zwischenprodukte aus den Komponenten A bis D mit den Aminoalkoholen (Komponente E) zu den OH-gruppenhaltigen Polyurethanharnstoffelastomeren umgesetzt. Diese Aminoalkohole mit 2 bis 16, vorzugsweise 3 bis 6 C-Atomen sind u.a. Monoethanolamin, Methylisopropanolamin, Ethylisopropanolamin, Methylethanolamin, 3-Aminopropanol, 1-Ethylaminobutanol-2, 4-Methyl-4-aminopentanol-2, N-(2-Hydroxyethyl)anilin. Diolamine sind besonders geeignet, da durch ihre Anlagerung am Kettenende die OH-Zahl der Polymeren verdoppelt wird. Als besonders günstig haben sich Diethanolamin und Diisopropanolamin erwiesen.

Das Verhältnis der Komponenten A bis E zueinander kann von 1,25 bis 13 Mol Diisocyanat je Mol Polydiol bei Verwendung von 0,3 bis 9, vorzugsweise 0,5 bis 5 Mol des Diols mit 2 bis 18 C-Atomen und 0,01 bis 1 Mol, vorzugsweise 0,15 bis 0,5 Mol, Triol variiert werden, wobei die Menge des verwendeten Diols teilweise von dem Molekulargewicht des verwendeten Polydiols abhängt. Die Menge des angewandten Isocyanats sollte zu 5 bis 35 % im Unterschuß, bezogen auf die Mengen der NH- oder hydroxylhaltigen Verbindungen vorliegen, so daß am Ende der Reaktion praktisch kein freies, nicht umgesetztes Isocyanat, aber freie, nicht umgesetzte Hydroxylgruppen verbleiben. Aus praktischen und lacktechnischen Gründen ist es jedoch häufig zweckmäßig, in einer Vorreaktion der Komponenten A, B, C und D einen Diisocyanatüberschuß von 5 bis 40 %, bevorzugt 10 bis 30 %, bezogen auf die zur vollständigen Umsetzung der Reaktionsteilnehmer erforderliche Menge, zu verwenden, so daß das Verhältnis der Zahl der eingesetzten Hydroxylgruppen zur Zahl der Isocyanatgruppen in dieser Reaktionsstufe ungefähr 1:1,05 bis 1:1,4, vorzugsweise ungefähr 1:1,1 bis 1:1,30 beträgt. In der zweiten Reaktionsstufe wird dann eine dem NCO-Gehalt entsprechende NH-äquivalente Menge der Komponente E, d.h. 0,05 bis 4, vorzugsweise 0,3 bis 2,5 Mol je Mol der Komponente A, zugesetzt, bzw. das NCO-Präpolymere wird zum Aminoalkohol gegeben, so daß die Aminogruppen mit dem Isocyanat reagieren. Wird in dieser zweiten Reaktionsstufe ein geringer Unterschuß an NH- bzw. NH₂-Gruppen gegenüber den NCO-Gruppen angeboten, dann wird ein Teil des Aminoalkohols in das Molekül eingebaut und ergibt je nach Aminoalkohol eine Verzweigungsstelle. Verwendet man einen Überschuß an NH-Gruppen, dann wird der Aminoalkohol erst bei der Vernetzungsreaktion völlig in den Polymerverband eingebaut. Damit ist es durch die Auswahl, d.h. durch Variation der Endgruppen, möglich, das Polymere den jeweiligen Anforderungen, wie die Fähigkeit zur Filmbildung und zur Dispergierung, anzupassen.

Die so aufgebauten thermoplastischen, elastischen OH-gruppenhaltigen Polyurethane werden in Lösung nach dem 2-Stufenverfahren, gegebenenfalls in Gegenwart von Katalysatoren und anderen Hilfsmitteln und/oder Zusatzstoffen hergestellt. Diese Produkte nach dem lösungsmittelfreien Batch-Verfahren herzustellen, ist nicht möglich. Da sich aufgrund der Anwesenheit des Triols und der Reaktion von Amin mit NCO-Gruppen bei der Substanzpolyaddition zumindest teilweise Gel-Teilchen bilden, wird in Lösung gearbeitet. Allgemein wird bei der Lösungspolyaddition die Gefahr einer örtlichen Übervernetzung, wie sie bei der Substanzpolyaddition auftritt, vermieden.

Beim 2-Stufenverfahren sind je nach Reaktionsbedingungen, d.h. z.B. Lösungsmittelmenge, Reaktionswärme, Reaktivität der Komponenten, zwei unterschiedliche Fahrweisen möglich, die sich nur in der ersten Stufe unterscheiden. Beispielhaft seien unterschiedliche Fahrweisen dargestellt.
Fahrweise 1: Das Diisocyanat wird mit etwas Lösungsmittel vorgelegt, dann werden die Bausteine A, B, C und gegebenenfalls der Katalysator und die Hilfs- und Zusatzstoffe in Lösungsmittel bei Temperaturen von 20 bis 90°C, vorzugsweise 30 bis 70°C, in 0,2 bis 5 Stunden zugegeben. Die Komponenten werden bis zum gewünschten NCO-Gehalt umgesetzt, dann wird in der 2. Stufe das Abstoppmittel (Komponente E) zugesetzt.
Fahrweise 2: Bei diesem Verfahren werden alle Ausgangskomponenten A bis D in einem Teil des Lösungsmittels gelöst, so daß Lösungen mit einem Feststoffgehalt von 15 bis 50 Gew.% gebildet werden. Anschließend werden die Lösungen unter Rühren auf Temperaturen von 20 bis 90°C, vorzugsweise von 30 bis 70°C, gegebenenfalls nach der Katalysatorzugabe, erwärmt. Dann werden die Komponenten bis zum gewünschten NCO-Gehalt umgesetzt, danach wird in der 2. Stufe das Abstoppmittel zugegeben.
Fahrweise 3: Die Ausgangskomponenten A, B und C werden mit einem Teil der Komponente D (z.B. dem reaktionsträgeren Isocyanat wenn Komponente D ein Gemisch aus mehreren Diisocyanaten darstellt) in einem Teil des Lösungsmittels bei Temperaturen von 20 bis 90°C, vorzugsweise von 30 bis 70°C, gegebenenfalls nach der Katalysatorzugabe bis 0 % NCO-Gehalt umgesetzt. Anschließend wird der restliche Teil der Komponente D zugegeben und die gesamte Reaktionslösung bis zum gewünschten NCO-Gehalt umgesetzt. Danach wird in der 2. Stufe das Abstoppmittel (Komponente E) zugesetzt.

Beim 2-Stufenverfahren nach Fahrweise 1 oder 2 wird in der ersten Stufe permanent mit einem NCO-Überschuß, gegenüber den Bausteinen A bis C gearbeitet. Bei beiden Fahrweisen ist es möglich, in einem Teil des Lösungsmittels die Reaktion zu beginnen und das restliche Lösungsmittel während oder nach der Reaktion zuzugeben.

Als Lösungsmittel für die Herstellung der Polyurethane wird vorzugsweise Tetrahydrofuran verwendet. Selbstverständlich können je nach Anwendungsgebiet die Polyurethane auch in anderen polaren Lösungsmitteln, wie Dioxan, Cyclohexanon, Dimethylformamid, N-Methylpyrrolidon, Dimethylsulfoxid oder Ethylglykolacetat hergestellt werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane und für die Vernetzungsreaktion seien beispielhaft genannt: tert.-Amine, wie Triethylamin, Triethylendiamin, N-Methyl-pyridin und N-Methyl-morpholin, Metallsalze, wie Zinnoctoat, Bleioctoat und Zinkstearat und organische Metallverbindungen, wie Dibutylzinndilaurat. Die geeignete Katalysatormenge ist abhängig von der Wirksamkeit des in Frage kommenden Katalysators. Im allgemeinen hat sich als zweckmäßig erwiesen, 0,005 bis 0,3 Gewichtsteile für jeweils 100 Gewichtsteile, vorzugsweise 0,01 bis 0,1 Gewichtsteile für jeweils 100 Gewichtsteile Polyurethan zu verwenden.

Die erfindungsgemäß verwendeten Polyurethane lassen sich als alleinige Bindemittel für die Herstellung von Magnetschichten verwenden, es ist jedoch für spezielle Anwendungszwecke bei magnetischen Aufzeichnungsträgern gemäß der Erfindung vorteilhaft, eine zweite Bindemittelkomponente in Mengen von 5 bis 50 Gewichtsteilen, vorzugsweise von 10 bis 40 Gewichtsteilen, bezogen auf die resultierende Gesamtbindemittelmenge, zuzusetzen.

Die im Bindemittelgemisch enthaltenen physikalisch trocknenden Bindemittel sind bekannt. Es handelt sich hierbei unter anderem um ein Polyvinylformal-Bindemittel, welches durch Hydrolyse eines Polymerisats eines Vinylesters und anschließende Umsetzung des Vinylalkohol-Polymeren mit Formaldehyd hergestellt wurde. Die Polyvinylformale haben zweckmäßigerweise einen Vinylformalgruppen-gehalt von mindestens 65 Gew.% und insbesondere mindestens 80 Gew.%. Geeignete Polyvinylformale haben einen Gehalt an Vinylalkohol-Gruppen von 5 bis 13 Gew.%, einen Gehalt an Vinylformal-Gruppen von 80 bis 88 Gew.%, ein spezifisches Gewicht von ca. 1,2 und eine Viskosität von 50 bis 120 mPas gemessen bei 20°C mit einer Lösung von 5 g Polyvinylformal in 100 ml Phenol-Toluol (1:1). In gleicher Weise geeignet sind neben dem Polyvinylformal Vinyl-chlorid-diol-mono- oder -di (meth) acrylat-Copolymerisate, die sich z.B. in an sich bekannter Weise durch Lösungscopolymerisation oder Suspensionscopolymeristion von Vinylchlorid und dem Diol-monomethacrylat oder -monoacrylat herstellen lassen. Das hierfür zum Einsatz gelangende Diolmono- oder -diacrylat oder -meth-acrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew.% 1,2-Propandiol besteht. Die Copolymerisate haben zweckmäßigerweise einen Vinylchloridgehalt von 50 bis 95 Gew.% und einen Diolacrylat- oder -meth-acrylat-Gehalt von 5 bis 50 Gew.%. Besonders geeignete Copolymerisate besitzen vorzugsweise einen Gehalt von 70 bis 90 Gew.% Vinylchlorid und 10 bis 30 Gew.% Diolmonoacrylat bzw. Diolmonomethacrylat. Eine 15 %ige Lösung besonders geeigneter Copolymerisate wie der Vinylchlorid-Propandiolmono-acrylat-Copolymerisate in einem Gemisch aus gleichen Volumenteilen von Tetrahydrofuran und Dioxan weist bei 25°C eine Viskosität von etwa 30 mPas auf. Der K-Wert nach H.Fikentscher (Cellulosechemie 13 (1932), S. 58 ff.) der besonders geeigneten Produkte liegt zwischen 30 und 50, vorzugsweise bei etwa 40.

Außerdem lassen sich vorteilhaft Phenoxyharze, deren Konstitution mit der wiederkehrenden Formel 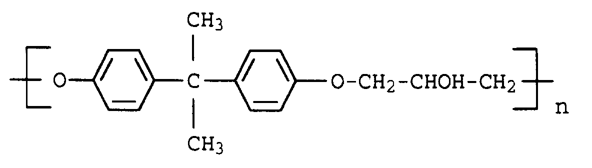
in der n annähernd gleich 100 ist, zu beschreiben ist, einsetzen. Es handelt sich hierbei um Polymere, wie sie unter den Handelsbezeichnungen Epikote® der Firma Shell Chemical Co. oder unter der Bezeichnung Epoxidharz PKHH® der Union Carbide Corporation bekannt sind.

In gleicher Weise eignen sich Celluloseester-Bindemittel zur Verwendung in dem bezeichneten Bindemittelgemisch. Dies sind Veresterungsprodukte der Cellulose mit Salpetersäure oder mit Carbonsäuren mit 1 bis 4 Kohlenstoffatomen, wie z.B. Celluloseacetat, Cellulosetriacetat, Celluloseacetopropionat, Celluloseacetobutyrat. Die Verwendung einer nicht dispergieraktiven Bindemittel-Komponente, wie z.B. VAGH®, Pioloform® oder PKHH® etc., führt - da der Anteil an dispergieraktivem Polyurethan reduziert wird - zu einer ev. Verschlechterung der Dispergierwirkung bzw. der Stabilität der Dispersion.

Als vorteilhaft hat sich nun die Verwendung von z.B. Sulfonatgruppen aufweisenden Vinylchlorid-Copolymeren gemäß z.B. US 4 748 084 erwiesen, die als Handelsprodukt MR 110I der Fa. Nippon Zeon erhältlich sind.

Sofern diese Cobinder gegenüber Isocyanat aktive Gruppen tragen (z.B. -OH) können sie bei Verwendung von Vernetzern mit in das Netzwerk eingebaut werden.

Die weitere Verarbeitung des Bindemittelgemisches mit magnetischen Materialien und Hilfsstoffen zu den erfindungsgemäßen magnetischen Aufzeichnungsträgern erfolgt in an sich bekannter Weise.

Als anisotrope magnetische Materialien können die an sich bekannten Pigmente verwendet werden, die die Eigenschaften der resultierenden Magnetschichten wesentlich beeinflussen, wie z.B. Gamma-Eisen(III)-oxid, feinteiliger Magnetit, ferromagnetisches undotiertes oder dotiertes Chromdioxid, kobaltmodifiziertes GammaEisen(III)-oxid, Bariumferrite oder ferromagnetische Metallteilchen. Bevorzugt sind nadelförmiges kobaltmodifiziertes oder unmodifiziertes Gamma-Eisen(III)oxid sowie ferromagnetisches Chromdioxid und Metallpigment. Die Teilchengröße beträgt im allgemeinen 0,1 bis 2 µm, bevorzugt ist der Bereich von 0,15 bis 0,8 µm.

Die erfindungsgemäßen Bindemittel können in Rezepturen ohne zusätzliche Verwendung von niedermolekularem Dispergiermittel eingesetzt werden. Es ist aber auch möglich in untergeordnetem Maße im Vergleich zum Stand der Technik geringe Mengen an Dispergiermittel zuzugeben, wie z.B. Lecithin, Zn-Oleat oder Zn-Stearat.

Ferner enthalten die Magnetschichten in kleinen Mengen Zusätze wie Gleitmittel, aber auch Füllstoffe, die bei der Dispergierung der magnetischen Materialien oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente sowie Fettsäureester oder Wachse, Siliconöle, Ruß usw. Die Menge der Zusätze ist die an sich übliche, sie liegt im allgemeinen unter 10 Gew.%, bezogen auf die Magnetschicht.

Das Mengenverhältnis von magnetischem Material zu Bindemittel in den erfindungsgemäßen Aufzeichnungsmaterialien liegt zwischen 1 bis 10 und insbesondere 3 bis 6 Gewichtsteilen magnetisches Material auf ein Gewichtsteil des Bindemittelgemisches. Es ist ein besonderer Vorteil, daß aufgrund des vorzüglichen Pigmentbindevermögens der speziellen Polyurethane hohe Magnetmaterialkonzentrationen in den Magnetschichten möglich sind, ohne daß die mechanisch-elastischen Eigenschaften verschlechtert oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 6 bis 36 µm. In neuerer Zeit ist auch die Anwendung der Magnetschichten auf Papierträgern für Zwecke der mittleren Datentechnik bedeutend geworden; auch hierfür lassen sich die erfindungsgemäßen Beschichtungsmassen vorteilhaft verwenden. Die Herstellung der erfindungsgemäßen magnetischen Aufzeichnungsträger kann in bekannter Weise erfolgen. Zweckmäßig wird die in einer Dispergiermaschine, z.B. einer Topfkugelmühle oder einer Rührwerksmühle, aus dem magnetischen Material und einer Lösung der Bindemittel unter Zusatz von Gleitmitteln und evtl. geringen Mengen Dispergiermitteln hergestellte Magnetpigmentdispersion nach dem Zumischen des Polyisocyanatvernetzers filtriert und mit der üblichen Beschichtungsmaschine, z.B. mittels eines Linealgießers, auf den nichtmagnetischen Träger aufgetragen. Zur Erzielung von hohen Ela- und Magnetwerten bei einer kürzeren Dispergierzeit ist es von Vorteil, die Dispergierung mit der Komponente 1 durchzuführen und die Komponenten 2 nach der Dispergierung einzurühren. Dieses Verfahren bietet sich an, denn die genannte Komponente 2 ist mit der Komponente 1 gut verträglich. In der Regel erfolgt eine magnetische Ausrichtung, bevor die flüssige Beschichtungsmischung auf dem Träger getrocknet wird; letzteres geschieht zweckmäßigerweise in 10 bis 200 s bei Temperaturen von 50 bis 90°C. Die Magnetschichten können auf üblichen Maschinen mittels Hindurchführen zwischen geheizten und polierten Walzen, gegebenenfalls bei Anwendung von Druck und Temperaturen von 25 bis 100°C, vorzugsweise 60 bis 90°C, geglättet und verdichtet werden. Dabei hat es sich bei vernetzenden Bindemitteln als sehr vorteilhaft erwiesen, die Kalandrierung vorzunehmen bevor die Vernetzung abgeschlossen ist, da die OH-Polymeren in unvernetzten Zustand sehr thermoplastisch sind, ohne hierbei zu verkleben. Die Dicke der Magnetschicht beträgt im allgemeinen 0,5 bis 20 µm, vorzugsweise 1 bis 10 µm. Im Falle der Herstellung von Magnetbändern werden die beschichteten Folien in der Längsrichtung in den üblichen, meist nach Zoll festgelegten Breiten geschnitten.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter zu Kilogramm.

### Polymer A

104 483 Teile eines Polyesters aus Adipinsäure und 1,4-Butandiol (Molekulargewicht ca. 1000), 11 048 Teile 1,6-Hexandiol, 564 Teile Trimethylolpropan und 1 158 Teile eines Di-(hydroxy)phosphonats (Molekulargewicht 232) wurden in 78 196 Teilen Tetrahydrofuran bei 60°C nach Zugabe von 2,5 Teilen Dibutylzinndilaurat mit 35 683 Teilen 2,4-Toluylendiisocyanat bis 0 % NCO-Gehalt umgesetzt. Anschließend wurden 31 352 Teile 4,4'-Diphenyl-methandiisocyanat zugegeben und die Reaktion bis zum Endpunkt (NCO-Gehalt: 1,32 %) weitergeführt. Anschließend wurde auf 45°C abgekühlt und 9 221 Teile Diethanolamin zugegeben. Danach wurde die resultierende Polymerlösung mit 66 148 Teilen Tetrahydrofuran auf einen Feststoffgehalt von 50 % verdünnt. Das Polymer wies eine OH-Zahl von 54,7 und einen K-Wert (gemessen als 1 %ige Lösung in Dimethylformamid) von 26,7 auf.

### Polymer B

44 084 Teile eines Polyesters aus Adipinsäure, iso-Phthalsäure und 1,6-Hexandiol (Molekulargewicht ca. 1000), 4 112 Teile Neopentylglykol, 236 Teile Trimethylolpropan und 482 Teile eines Di-(hydroxy)phosphonats (Molekulargewicht 232) wurden in 32 419 Teilen Tetrahydrofuran bei 60°C nach Zugabe von 1 Teil Dibutylzinndilaurat mit 9 333 Teilen 2,4-Toluylendiisocyanat bis 0 % NCO-Gehalt umgesetzt. Anschließend wurden 13 197 Teile 4,4'-Diphenylmethandiisocyanat zugegeben und die Reaktion bis zum Endpunkt (NCO-Gehalt: 1,33 %) weitergeführt. Anschließend wurde auf 45°C abgekühlt und 3 482 Teile Diethanolamin zugegeben. Danach wurde die resultierende Polymerlösung mit 27 561 Teilen Tetrahydrofuran auf einen Feststoffgehalt von 50 % verdünnt. Das Polymer wies eine OH-Zahl von 45 und einen K-Wert (gemessen als 1 %ige Lösung in Dimethylformamid) von 30 auf.

### Beispiel 1

In einer Rührwerksmühle von 0,12 l Rauminhalt, gefüllt mit 230 g SAZ-kugeln mit einem Durchmesser von 1,0 bis 1,6 mm wurden 1.026,02 g eines Slurrys, befindlich in einem gerührten Vorratsbehälter von 1 l Fassungsvermögen und einer Temperatur von 25°C mit einem Durchsatz von 10 kgh-¹ 14 h dispergiert.

Der Slurry setzt sich zusammen aus 136 g eines Co-dotierten Eisenoxids mit einer mittleren Teilchengröße von 0,15 µ und einem Verhältnis von Länge zu Dicke von 4:1 bis 7:1 und einer Koerzitivfeldstärke von 50 kAm⁻¹, 204 g eines ferromagnetischen Chromdioxidpigments mit einer mittleren Teilchengröße von 0,24 µm und einem Verhältnis von Länge zu Dicke von 5:1 bis 8:1 und einer Koerzitivfeldstärke von 51 kAm⁻¹ und einer spezifischen Oberfläche von ≧ 30 m²g-¹, 110,94 g einer 50 %igen Tetrahydrofuran-Lösung des Polymeren A, 64,09 g einer 22 %igen Lösung eines Polyvinylformals in Tetrahydrofuran, 7,48 g eines niedermolekularen Dispergierhilfsmittels, 16,32 g eines funktionalisierten (Meth-)acrylat Copolymers als 50 %ige Lösung in Tetrahydrofuran, 3,32 g eines handelsüblichen Gemisches von Fettsäuren und Fettsäureestern und 439,62 g Tetrahydrofuran.

Die Magnetdispersion wurde dann durch einen Filter von 1 µm Porenweite filtriert und unmittelbar vor dem nachfolgenden Auftragen auf eine 15 µm starke Polyethylenterephthalatfolie unter Rühren 44,34 g einer 50 %igen Lösung von Triisocyanat aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 60 und 90°C getrocknet. Das Hindurchführen zwischen beheizten Walzen (65°C, Liniendruck 200 kg/cm) wurde die Magnetschicht verdichtet. Die Dicke der Magnetschicht beträgt 2,4 µm. Die beschichtete Folie wurde anschließend in Videobänder von 1/2 Zoll Breite geschnitten.

### Vergleichsversuch 1

Es wurde wie in Beispiel 1 beschrieben verfahren, jedoch wurden die 110,94 g des Polyurethans A durch 110,94 g einer 50 %igen Lösung eines niedermolekularen polyfunktionellen Polyurethans mit einer OH-Zahl von 55 und einem K-Wert von 30 gemäß EP 0 099 533 in Tetrahydrofuran ersetzt.

### Vergleichsversuch 2

Es wurde wie in Beispiel 1 beschrieben verfahren, jedoch wurde das Polyurethanelastomer A durch 142,22 g einer 50 %igen Lösung eines niedermolekularen polyfunktionellen Polyurethans mit einer OH-Zahl von 55 und einem K-Wert von 30 gemäß EP 0 099 533 in Tetrahydrofuran/Dioxan 1:1 und sowohl die 50 %ige Lösung eines (Meth-)acrylat Copolymers als auch die 22 %ige Lösung des Polyvinylformals durch 39,96 g einer 20 %igen Lösung eines Vinylchlorid/Vinylacetat/Vinylalkohol-Copolymers (VAGH^{R} der Fa. Union Carbide) in Tetrahydrofuran/Dioxan 1:1 ersetzt. Als Dispergiermittel werden 6,81 g eines Phosphorsäureesters eines Fettalkoholalkoxilats (Lutensit AEP^{R} der Fa. BASF) und als Gleitmittel 9,25 g Methylstearat verwendet. Anstelle der 44,34 g 50 %iger Triisocyanatlösung werden 48,16 derselben eingesetzt.

An den beschichteten Folien wurde eine Glanzmessung, d.h. die Reflexion im 60°-Winkel an der unsatinierten Schicht durchgeführt. Die Ergebnisse sind in der Tabelle 1 angegeben.

| | Glanz 95 (nach x Stunden) | Endglanz | Dauerlauf |
|---|---|---|---|
| Beispiel 1 | 8 | 101 | i. O. |
| Vergleichsversuch 1 | nicht erreicht | 90 | i. O. |
| Vergleichsversuch 2 | - | 41 (instabil) | - |

An den für den Videobereich vorgesehenen magnetischen Aufzeichnungsträgern wurden auf einem
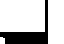 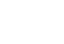 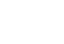 VHS-Recorder der Fa. Victor Company of Japan gegen das Bezugsband BRV (OdB)
folgende Messungen durchgeführt:
(2) Videopegel (Luminanzsignal): Luminanzsignal eines 100 % Weißbildes, gemessen mit dem Störspannungsmesser UPSF der Firma Rohde und Schwarz (> 100 kHz)
(3) Videostörabstand (Video-S/N): Verhältnis des Luminanzsignals eines 100 % Weißbilds zum Rauschpegel, gemessen mit dem Störspannungsmesser UPSF der Fa. Rohde und Schwarz (> 100 kHz).
(4) Farbstörabstand (Farb-S/N): Verhältnis des Farbsignals einer Rotfläche zum Rauschpegel, gemessen mit dem Störspannungsmesser UPSF der Fa. Rohde und Schwarz (100 kHz - 3 MHz).

Die Messergebnisse sind in der Tabelle 2 angegeben.

**Tabelle 2**

| | Luminanzsignal | S/N | Farb S/N |
|---|---|---|---|
| Beispiel 1 | 3,2 | 3,8 | - 1,5 |
| Vergleichsversuch 1 | 2,8 | 3,0 | - 5 |
| Vergleichsversuch 2 | nicht dispergierbar | daher keine | Meßwerte |

## Patentansprüche

1. Magnetischer Aufzeichnungsträger, bestehend aus einem nicht-magnetischen Trägermaterial und mindestens einer haftfest darauf aufgebrachten Magnetschicht auf der Basis eines in einem mindestens zu 50 Gew. -% aus einem thermoplastischen Polyurethan bestehenden Bindemittel feinverteilten magnetischen Materials, dadurch gekennzeichnet, daß als thermoplastisches Polyurethan ein in Tetrahydrofuran lösliches, isocyanatgruppenfreies, verzweigtes Polyurethan mit Phosphonat-Gruppen entlang der Polyurethan-Zweige sowie OH-gruppenhaltigen Harnstoff an den Kettenenden und einem Molekulargewicht (M_{W}) zwischen 4000 und 30 000 eingesetzt wird, welches aus
A) 1 Mol eines Polydiols mit einem Molekulargewicht zwischen 400 und 4000
B) 0,3 bis 9 Mol eines Gemisches aus
B1) mindestens einem Diol mit 1 bis 18 Kohlenstoffatomen und
B2) einem mindestens eine Phosphonatgruppe aufweisenden Diol,
C) 0,01 bis 1 Mol eines Tri- oder Polyols mit 3 bis 25 Kohlenstoffatomen,
D) 1,25 bis 13 Mol eines Diisocyanats mit 6 bis 30 Kohlenstoffatomen, wobei das Verhältnis NCO:OH in der Summe der Komponenten A, B, C und D 1,05:1,0 bis 1,4:1,0 beträgt, und
E) 0,05 bis 4 Mol eines OH-gruppenhaltigen, gegenüber Isocyanaten reaktiven primären oder sekundären Amins
hergestellt wird.

2. Magnetischer Aufzeichnungsträger gemäß Anspruch 1, dadurch gekennzeichnet, daß die Komponente B2) eine Verbindung der Formeln (I) - (IV) ist 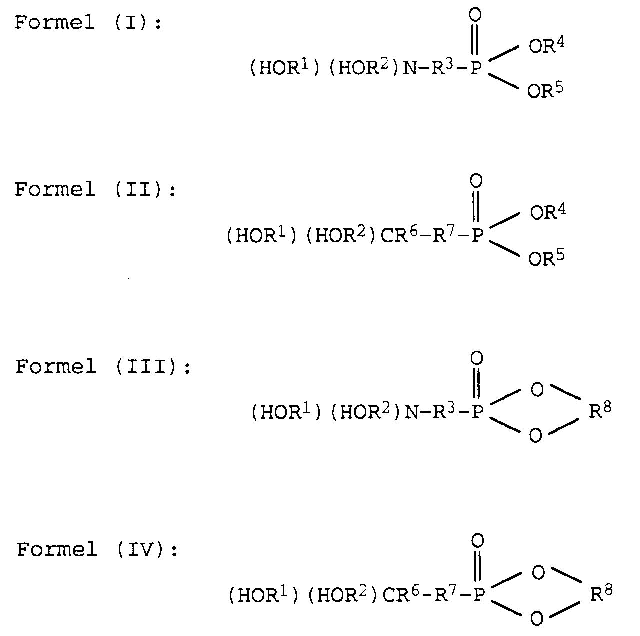 wobei
R¹, R², R³, R⁷, R⁸ = Alkylen, Cycloalkylen, Arylen, Alkenylen oder Alkinylen mit 1 bis 20 Kohlenstoffatomen
und
R⁴, R⁵, R⁶ = Alkyl, Cycloalkyl, Aryl, Alkenyl, Alkinyl mit 1 bis 20 Kohlenstoffatomen,
bedeutet.

3. Magnetischer Aufzeichnungsträger gemäß Anspruch 1, dadurch gekennzeichnet, daß die Komponente B2) eine Verbindung der Formeln (I)-(IV) ist 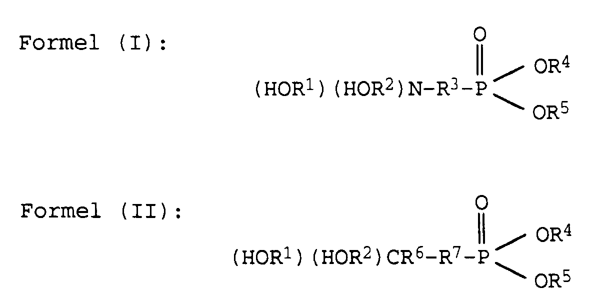 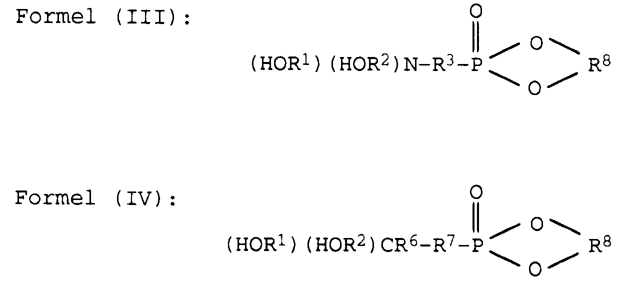 wobei
R¹, R², R³, R⁷, R⁸ = Alkylen, Cycloalkylen, Arylen, Alkenylen oder Alkinylen mit 1 bis 20 Kohlenstoffatomen
und
R⁴, R⁵, R⁶ = Alkyl, Cycloalkyl, Aryl, Alkenyl, Alkinyl mit 1 bis 20 Kohlenstoffatomen,
bedeutet und als Komponente D) 4,4'-Diphenylmethandiisocyanat eingesetzt wird.

4. Magnetischer Aufzeichnungsträger gemäß Anspruch 1, dadurch gekennzeichnet, daß die Komponente B2) ein Diol der Formel (V) ist, darstellt. 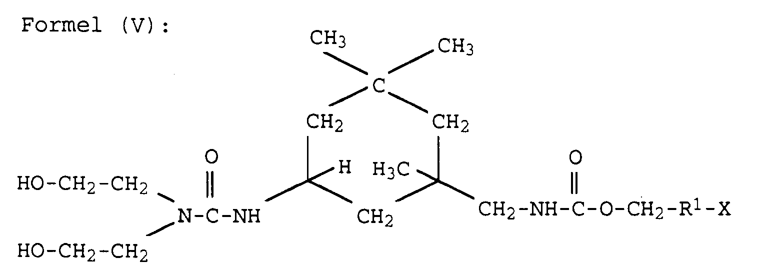 in welcher R¹ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet oder 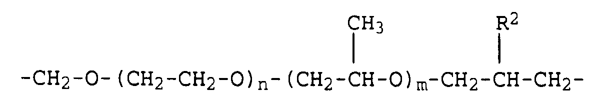 R² = H oder CH₃
n = 0 bis 100
m = 0 bis 50
n + m ≧ 1 und 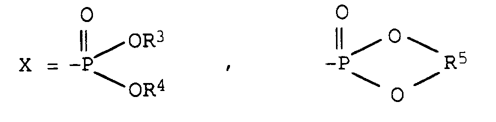
R³, R⁴ Alkyl, Cycloalkyl, Aryl, Alkenyl, Alkinyl mit 1 - 20 Kohlenstoffatomen und
R⁵ Alkylen, Cycloalkylen, Acrylen, Alkenylen, Alkinylen mit 1 bis 20 Kohlenstoffatomen bedeutet.

5. Magnetischer Aufzeichnungsträger gemäß Anspruch 1, dadurch gekennzeichnet, daß die Komponente B2) ein Diol der Formel (V) ist 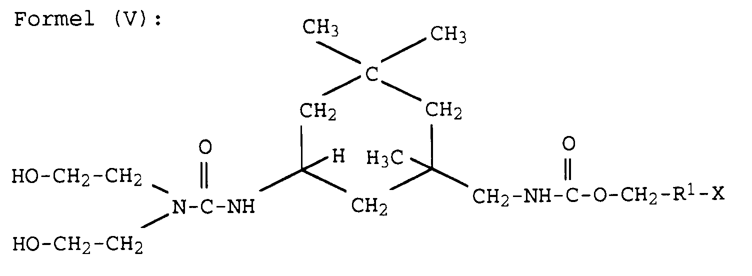 in welcher R¹ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet oder 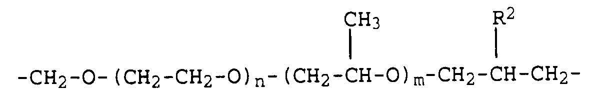 R² = H oder CH₃
n = 0 bis 100
m = 0 bis 50
n + m ≧ 1 und 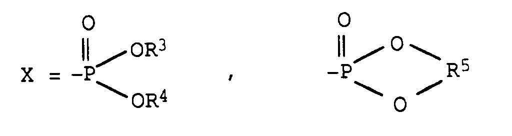
R³, R⁴ Alkyl, Cycloalkyl, Aryl, Alkenyl, Alkinyl mit 1 - 20 Kohlenstoffatomen
R⁵ Alkylen, Cycloalkylen, Acrylen, Alkenylen, Alkinylen mit 1 bis 20 Kohlenstoffatomen bedeutet
und als Komponente D) 4,4'-Diphenylmethandiisocyanat eingesetzt wird.

6. Magnetischer Aufzeichnungsträger gemäß Anspruch 1, dadurch gekennzeichnet, daß die Komponente B2) ein Diol der Formel (VI) ist 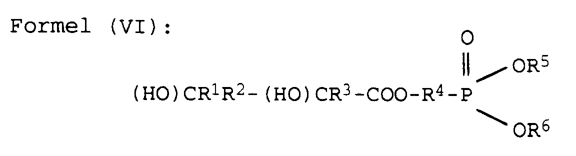 in welcher
R¹, R², R³ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet,
R⁴ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet oder 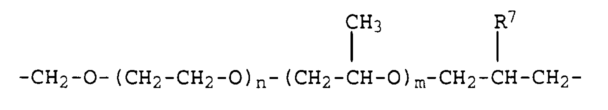 R⁷ = H oder CH₃
n = 0 bis 100
m = 0 bis 50
n + m ≧ 1
R⁵, R⁶ = jeder für sich, oder zusammen unter Ausbildung eines Ringsystems einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet.

7. Magnetischer Aufzeichnungsträger gemäß Anspruch 1, dadurch gekennzeichnet, daß die Komponente B2) ein Diol der Formel (VI) ist 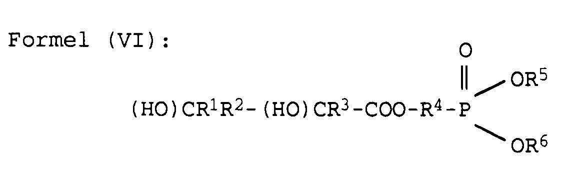 in welcher
R¹, R², R³ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet,
R⁴ einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet oder 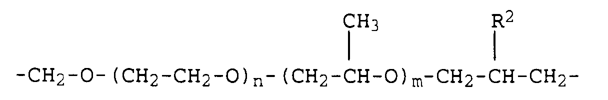 R⁷ = H oder CH₃
n = 0 bis 100
m = 0 bis 50
n + m ≧ 1
R⁵, R⁶ = jeder für sich, oder zusammen unter Ausbildung eines Ringsystems einen geradkettigen oder verzweigten oder cyclischen Rest mit 1 bis 40 Kohlenstoffatomen und mit einem gewichtsmäßigen Anteil der Kohlenstoffatome zwischen 20 und 86 % bedeutet und
als Komponente D) 4,4'-Diphenylmethandiisocyanat eingesetzt wird.

8. Magnetischer Aufzeichnungsträger gemäß Anspruch 1, dadurch gekennzeichnet, daß die Komponente B1) ganz oder teilweise durch Diamine mit 2 bis 15 Kohlenstoffatomen ersetzt wird.

9. Magnetischer Aufzeichnungsträger gemäß Anspruch 1, dadurch gekennzeichnet, daß die Komponente B1) ganz oder teilweise durch primäre oder sekundäre Aminoalkohole mit 2 bis 20 Kohlenstoffatomen ersetzt wird.

10. Magnetischer Aufzeichnungsträger gemäß Anspruch 1, dadurch gekennzeichnet, daß die Komponente B1) ganz oder teilweise durch Wasser ersetzt wird.

11. Magnetischer Aufzeichnungsträger gemäß Anspruch 1, dadurch gekennzeichnet, daß das thermoplastische, in Tetrahydrofuran lösliche, isocyanatgruppenfreie, verzweigte Polyurethan mit Phosphonat-Gruppen entlang der Polyurethan-Zweige sowie OH-gruppenhaltigen Harnstoffgruppen an den Kettenenden mit einem Isocyanat aus der Gruppe der Di-, Tri- und Polyisocyanate und der Isocyanatprepolymere mit einem Molgewicht bis zu 10 000 vernetzt wird.

12. Magnetischer Aufzeichnungsträger gemäß Anspruch 1, dadurch gekennzeichnet, daß die OH-Endgruppen zu mehr als 80 % aus einer
-NH-CO-NR²-R¹OH oder 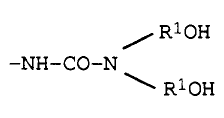 -Gruppe bestehen,
wobei
R¹ = -(CH₂)ₙ-
R² = -H, -CH₃, -(CH₂)ₙ-CH₃ und
n = 1 bis 10
bedeuten.

13. Magnetischer Aufzeichnungsträger gemäß Anspruch 1, dadurch gekennzeichnet, daß er das genannte Polyurethan als alleiniges Bindemittel enthält.
